# EUROPEAN PATENT SPECIFICATION

(11) **EP 3 779 749 B1**
(45) Date of publication and mention of the grant of the patent: **07.09.2022**
(21) Application number: 19834389.9
(22) Date of filing: 11.06.2019
(51) Int. Cl.: H04L 9/40, G06F 21/32, G06F 21/57, G06F 21/62, G06Q 10/06, G06Q 40/02, G06Q 50/26

(54) **RISK CONTROL METHOD, RISK CONTROL DEVICE, ELECTRONIC DEVICE AND STORAGE MEDIUM**
VERFAHREN ZUR RISIKOKONTROLLE, VORRICHTUNG ZUR RISIKOKONTROLLE, ELEKTRONISCHE VORRICHTUNG UND SPEICHERMEDIUM
PROCÉDÉ DE CONTRÔLE DE RISQUES, DISPOSITIF DE CONTRÔLE DE RISQUES, DISPOSITIF ÉLECTRONIQUE ET SUPPORT D'INFORMATIONS

(30) Priority: 11.07.2018 CN 201810755331
(43) Date of publication of application: 17.02.2021
(73) Proprietor: Advanced New Technologies Co., Ltd., George Town, Grand Cayman KY1-9008 (KY)
(72) Inventor: YE, Fanfan, Hangzhou, Zhejiang 311121 (CN)
(74) Representative: Goddar, Heinz J.
(86) International application number: PCT/CN2019/090737
(87) International publication number: WO 2020/010983

(56) References cited:
- CN-A- 105 550 927
- CN-A- 105 791 335
- CN-A- 107 977 787
- CN-A- 108 985 070
- US-A1- 2010 162 386
- US-A1- 2016 065 554

## Description

### Technical Field

The present application relates to the technical field of risk control, and more particularly, to a risk control method, a risk control apparatus, an electronic device, and a storage medium.

### Background

In order to guarantee the security of user operations, user operations with high risks are captured in existing risk control systems, and prescribed risk control processing such as user identity verification is performed on such user operations. Only users who pass the identity verification are allowed to continue transactions. User operations with low risks are allowed. Therefore, insecure transactions are avoided.

US 2016/0065554 A1 discloses a method of managing authentication during a user session that comprises the steps of operating a user session for a specific user, maintaining a user authentication level for the user session, monitoring one or more factors relating to the user's activity, applying one or more rules to the monitored factors, detecting that a rule has indicated the user's current authentication level is too high, and lowering the user's authentication level, without ending the user's session. It addresses the problem that, once a user authentication level has been stepped up by supplementary authentication for performing e.g. a payment, the user still enjoys privileges of this increased user authentication level. The disclosed method has therefore the ability to automatically reduce the level of privilege associated with a user's session, thereby de-authorizing the user or "stepping-down" their current level of authorization.

US 2010/0162386 A1 discloses a context aware biometric authentication scheme, where a security threshold required for access to one or more applications is dynamically controlled in response to context. The dynamically controlled security threshold is e.g. a biometric recognition threshold that can be lowered when a context usage override condition is met (due to e.g. the user's location, time, amount of a payment being performed).

It should be noted that the above introduction to the technical background is only to facilitate a clear and complete description of the technical solution of the present invention and to facilitate understanding by those skilled in the art. It should not be considered that the technical solutions are known to those skilled in the art just because these solutions are set forth in the Background section of the present invention.

### Summary of the Invention

The invention is defined by the claims. Preferred embodiments of the invention are recited by the dependent claims. In the following, it is noted that the inventor found that in the above existing technologies, differences between different users and differences in risks of different user operations are not considered. The risk grading for the user operations is relatively rough, and defense schemes against risks are relatively simple and inflexible. Therefore, if the standard for identity verification is set to be strict, that is, more user operations are judged as high-risk operations, users will be frequently asked for identity verification; otherwise, if the standard for identity verification is set to be loose, the security of user operations is reduced.

In order to solve the above problems, embodiments of the present specification provide a risk control method, a risk control apparatus, a risk control system, an electronic device, and a storage medium, which can accurately calculate an expected asset loss, flexibly implement risk control processing for different users and risks, reduce interruptions to users caused by risk control processing while guaranteeing the security of user operations, and improve user experience.

According to a first aspect of the embodiments of the present specification, a risk control method is provided. The risk control method includes: acquiring risk information of a current user operation, the risk information including a risk type and/or a parameter characterizing the magnitude of a risk corresponding to the risk type; calculating, for an identity verification mode corresponding to historical identity verification, a security coefficient according to the risk information and security information corresponding to the identity verification mode, wherein the historical identity verification includes identity verification for a current user prior to the user operation, and the security information is information related to the security of the identity verification mode; calculating an expected asset loss according to the security coefficient and an amount corresponding to the user operation; and performing prescribed risk control processing on the user operation when the expected asset loss satisfies a preset condition, and waiving performing prescribed risk control processing on the user operation when the expected asset loss does not satisfy the preset condition.

According to a second aspect of the embodiments of the present specification, a risk control apparatus is provided. The risk control apparatus includes: a risk acquisition unit, configured to acquire risk information of a current user operation, the risk information including a risk type and/or a parameter characterizing the magnitude of a risk corresponding to the risk type; a security coefficient calculation unit, configured to calculate, for an identity verification mode corresponding to historical identity verification, a security coefficient according to the risk information and security information corresponding to the identity verification mode, wherein the historical identity verification includes identity verification for a current user prior to the user operation, and the security information is information related to the security of the identity verification mode; an asset loss calculation unit, configured to calculate an expected asset loss according to the security coefficient and an amount corresponding to the user operation; and a risk control processing unit, configured to perform prescribed risk control processing on the user operation when the expected asset loss satisfies a preset condition, and waive performing prescribed risk control processing on the user operation when the expected asset loss does not satisfy the preset condition.

According to a third aspect of the embodiments of the present specification, an electronic device is provided. The electronic device includes a processor and a memory for storing computer-readable programs that cause the processor to perform the risk control method according to the first aspect.

According to a fourth aspect of the embodiments of the present specification, a storage medium storing computer-readable programs is provided. The computer-readable programs cause a processing apparatus to perform the risk control method according to the first aspect.

The beneficial effects of the embodiments of the present specification are as follows: an expected asset loss can be accurately calculated, risk control processing can be flexibly implemented for different users and risks, interruptions to users caused by risk control processing can be reduced while guaranteeing the security of user operations, and user experience can be improved.

With reference to the following description and drawings, specific implementations of the present invention are disclosed in detail, and the manner in which the principles of the present invention can be adopted is indicated. It should be understood that the implementations of the present invention are not thus limited in scope. Within the scope of the spirit and terms of the appended claims, the implementations of the present invention include many changes, modifications, and equivalents.

Features described and/or illustrated for one implementation may be used in one or more other implementations in the same or similar manner, combined with features in other implementations, or replace features in other implementations.

It should be emphasized that the term "comprising/including/having" as used herein refers to the presence of features, whole pieces, steps, or components, but does not exclude the presence or addition of one or more other features, whole pieces, steps, or components.

### Brief Description of the Drawings

The included drawings are used to provide a further understanding of the embodiments of the present specification, which form a part of the specification, are used to exemplify the implementations of the present invention, and explain the principles of the present invention together with the literal descriptions. Apparently, the drawings in the following description are only some embodiments of the present invention. Those of ordinary skill in the art can also obtain other drawings according to these drawings without creative labor. In the drawings:
FIG. 1 is a schematic diagram of a risk control method in Embodiment 1 of the present specification.
FIG. 2 is a schematic diagram of an implementation method for step 104 in Embodiment 1 of the present specification.
FIG. 3 is another schematic diagram of the risk control method in Embodiment 1 of the present specification.
FIG. 4 is another schematic diagram of the risk control method in Embodiment 1 of the present specification.
FIG. 5 is yet another schematic diagram of the risk control method in Embodiment 1 of the present specification.
FIG. 6 is a schematic diagram of a risk control apparatus in Embodiment 2 of the present specification.
FIG. 7 is another schematic diagram of the risk control apparatus in Embodiment 2 of the present specification.

### Detailed Description

The foregoing and other features of the present invention will become apparent from the following specification with reference to the drawings. In the specification and the drawings, specific implementations of the present invention are disclosed in detail, which show some implementations in which the principles of the present invention can be adopted. It should be understood that the present invention is not limited to the described implementations. Rather, the present invention includes all modifications, variations, and equivalents falling within the scope of the appended claims.

In the embodiments of the present specification, the term "and/or" includes any and all combinations of one or more of the associated listed terms.

In the embodiments of the present specification, the singular forms "a," "the," etc. include plural forms, which should be broadly understood as "a" or "a class of' and not limited to the meaning of "one." In addition, the term "the" should be understood to include both singular and plural forms unless the context clearly indicates otherwise. In addition, the term "according to" should be understood as "according at least in part to..." and the term "based on" should be understood as "based at least in part on..." unless the context clearly indicates otherwise.

Various implementations of the embodiments of the present specification are described below with reference to the drawings. These implementations are only examples of, not limitations to, the embodiments of the present specification.

### Embodiment 1

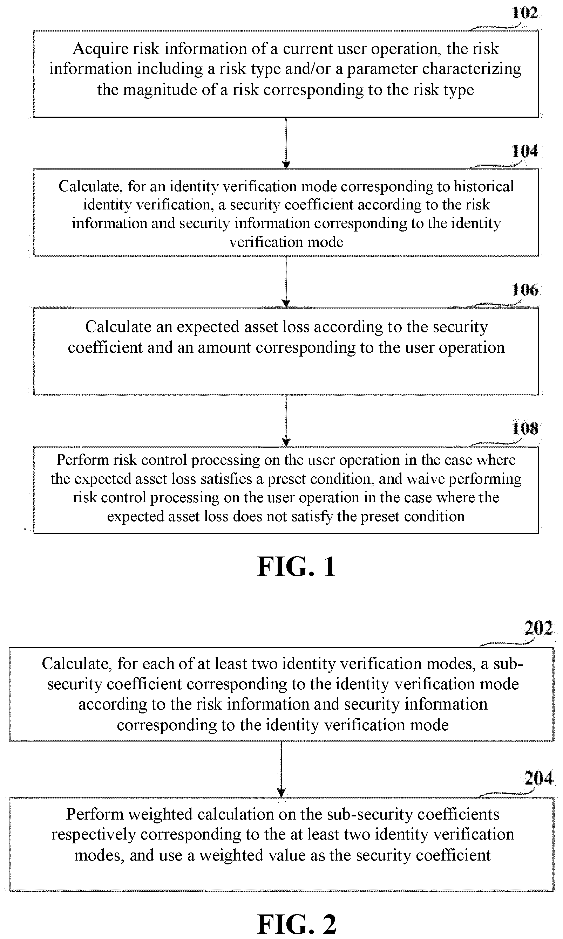

Embodiment 1 provides a risk control method. FIG. 1 is a schematic diagram of the risk control method in the present embodiment.

As shown in FIG. 1, the risk control method includes the following steps.

In step 102, risk information of a current user operation is acquired, the risk information including a risk type and/or a parameter characterizing the magnitude of a risk corresponding to the risk type.

In step 104, for an identity verification mode corresponding to historical identity verification, a security coefficient is calculated according to the risk information and security information corresponding to the identity verification mode. The historical identity verification includes identity verification for a current user prior to the user operation, and the security information is information related to the security of the identity verification mode.

In step 106, an expected asset loss is calculated according to the security coefficient and an amount corresponding to the user operation.

In step 108, prescribed risk control processing is performed on the user operation in the case where the expected asset loss satisfies a preset condition, and prescribed risk control processing is waived on the user operation in the case where the expected asset loss does not satisfy the preset condition.

It can be seen from the above embodiments that by calculating a security coefficient according to risk information and security information of a current user operation and using the security coefficient for calculating an expected asset loss, the expected asset loss can be accurately calculated. Therefore, it can be accurately determined whether prescribed risk control processing is performed, so that risk control processing can be flexibly implemented for different users and risks, interruptions to users caused by risk control processing can be reduced while guaranteeing the security of user operations, and user experience can be improved.

Moreover, since the security coefficient is calculated for an identity verification mode, the security can be guaranteed for various identity verification modes and the interruptions can be reduced, that is, the security can be guaranteed and the interruptions can be reduced in a scenario of various user identity verification modes.

In FIG. 1, step 100 is performed before step 102, but the present embodiment is not limited thereto. Step 100 may also be performed after step 102 and before step 104, or may be performed in parallel with step 102.

In the present embodiment, a user operation is an operation for a certain amount. For example, it may be a transaction operation between a user and a merchant, or it may be an asset transfer operation of a user. The asset transfer operation may be, for example, a transfer operation.

In the present embodiment, the risk type may include, for example, a risk of device loss, a remote risk for a personal computer, a risk of secondary number allocation, a risk of conventional theft, etc. The risk of conventional theft characterizes a risk of the theft of an operating account other than the device loss, but the present embodiment is not limited thereto and may include other risk types that can be identified. In addition, the parameter characterizing the magnitude of a risk corresponding to the risk type may be, for example, a risk score corresponding to the risk type, and the score may be, for example, a value between 0-1, which is used to characterize the corresponding risk magnitude. However, the present embodiment is not limited thereto, and the score may also use other numerical ranges. Moreover, the risk score may not be used as the parameter, but a risk grade may be used as the parameter.

In the present embodiment, in addition to the risk type and/or the above parameter, the risk information may also include other information related to the risk, for example, indicating a risk weight corresponding to the risk type, etc. The risk information in the present embodiment may be identified using existing risk identification strategies.

In the present embodiment, the identity verification mode includes, for example, a manual verification mode, a face verification mode, a privacy verification mode, etc. The privacy verification may be, for example, security inquiry verification, ID card number verification, bank card verification, etc. However, the present embodiment is not limited thereto, and may also include other modes capable of achieving identity verification.

In the present embodiment, the security information is security-related information corresponding to a certain identity verification mode. For example, the security information may include at least one of the following information: an identifier of a device used for identity verification corresponding to the identity verification mode, an execution environment of identity verification corresponding to the identity verification mode, an execution time of identity verification corresponding to the identity verification mode, a result of identity verification corresponding to the identity verification mode, and a frequency or number of identity verification corresponding to the identity verification mode. However, the present embodiment is not limited thereto, and the security information may also include other information.

In the present embodiment, the identifier of a device may be, for example, an identification code and/or address of the device. The identification code of the device may be, for example, a Unique Material Identifier (UMID) of the device. The address of the device may be, for example, a hardware address or an Internet address. The execution environment of identity verification may be, for example, the Internet, a wireless local area network, a Location Based Service (LBS), etc. The result of identity verification may be, for example, that the identity verification is successful or not. However, the present embodiment is not limited thereto, and other device identifiers and operating environments may also be adopted.

In the present embodiment, the prescribed risk control processing is to reduce risks, for example, including: not allowing the user operation, restricting the authority for the user operation, and requiring the user to verify the identity, etc., but the present embodiment is not limited thereto. Other risk control processing modes may also be included. The risk control processing may be prescribed according to an actual situation. Waiving performing the risk control processing is that the user operation is directly allowed.

In the present embodiment, in step 104, each piece of specific information in the above risk information and security information may be quantified as a numerical value, corresponding weights are assigned to these different pieces of specific information, and they are combined according to a certain rule for calculating the security coefficient. Specific quantification modes and rules may be determined according to actual needs. For example, the security coefficient may be calculated using the Delphi method.

For example, under the following circumstances: "the risk type is a conventional theft risk, the risk magnitude is 0.4, the security information includes: identity verification is performed within 24 hours, face identification verification is performed once under the same device, and the verification result is that the verification is passed", the security coefficient may be calculated according to the above information and the Delphi method. For example, it is calculated as 0.95 (when a highest value of the security coefficient is 1).

In the present embodiment, the above historical identity verification may correspond to one or at least two identity verification modes.

In the case where the historical identity verification corresponds to one identity verification mode, for the identity verification mode, a security coefficient corresponding to the identity verification mode is calculated according to the risk information and security information corresponding to the identity authentication mode.

FIG. 2 is a schematic diagram of an implementation method for step 104. As shown in FIG. 2, in the case where the historical identity verification corresponds to at least two identity verification modes, step 104 may include the following steps:

In step 202, for each of the at least two identity verification modes, a sub-security coefficient corresponding to the identity verification mode is calculated according to the risk information and security information corresponding to the identity verification mode.

In step 204, weighted calculation is performed on the sub-security coefficients respectively corresponding to the at least two identity verification modes, and a weighted value is used as the security coefficient.

Steps 202-204 are optional steps.

In the present embodiment, in step 106, the expected asset loss may be calculated according to the security coefficient and the amount corresponding to the user operation in accordance with a preset rule. The expected asset loss may characterize a potential asset loss.

In the present embodiment, step 106 may, for example, calculate the expected asset loss according to the following formula (1):

Expected asset loss=amount corresponding to user operation×(1-security coefficient) (1)

The value of the security coefficient is limited to vary in a range of 0 to 1. However, the present embodiment is not limited thereto, and the range of values of the security coefficient may also be limited to other ranges. The limitation of the value range of the security coefficient may be achieved by adjusting specific rules used when calculating the security coefficient.

However, the present embodiment is not limited to calculating the expected asset loss using the above formula (1), and other suitable formulas may also be used for calculation.

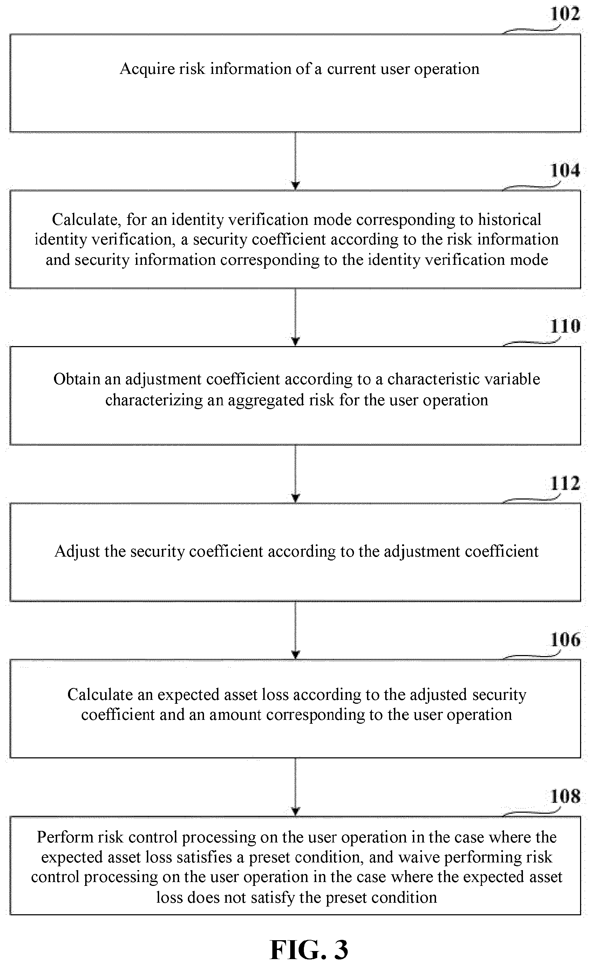

FIG. 3 is another schematic diagram of the risk control method in the present embodiment. As shown in FIG. 3, the risk control method may further include the following steps.

In step 110, an adjustment coefficient is obtained according to a characteristic variable characterizing an aggregated risk for the user operation.

Moreover, after step 104, the risk control method may further include the following step.

In step 112, the security coefficient is adjusted according to the adjustment coefficient.

At this moment, in step 106, the expected asset loss may be calculated according to the adjusted security coefficient and the amount corresponding to the user operation. Therefore, the impact of an aggregated risk can be reflected in the calculated expected asset loss, so that the expected asset loss can be calculated more accurately, and the risk control can quickly respond to the aggregated risk. Here, the aggregated risk may be, for example, a batch attack risk, but the present embodiment is not limited thereto. The aggregated risk may also be other types of aggregated risk.

Steps 110-112 are optional steps.

In FIG. 3, step 110 is performed after step 104, but the present embodiment is not limited thereto. Step 110 may also be performed before step 104, or may be performed in parallel with step 104.

In the present embodiment, step 112 may include: using a value obtained by multiplying the adjustment coefficient and the security coefficient as the adjusted security coefficient.

In the case where steps 110 and 112 are performed, step 106 may calculate the expected asset loss according to the following formula (2):

Expected asset loss=amount corresponding to user operation×(1-adjusted security coefficient) (2)

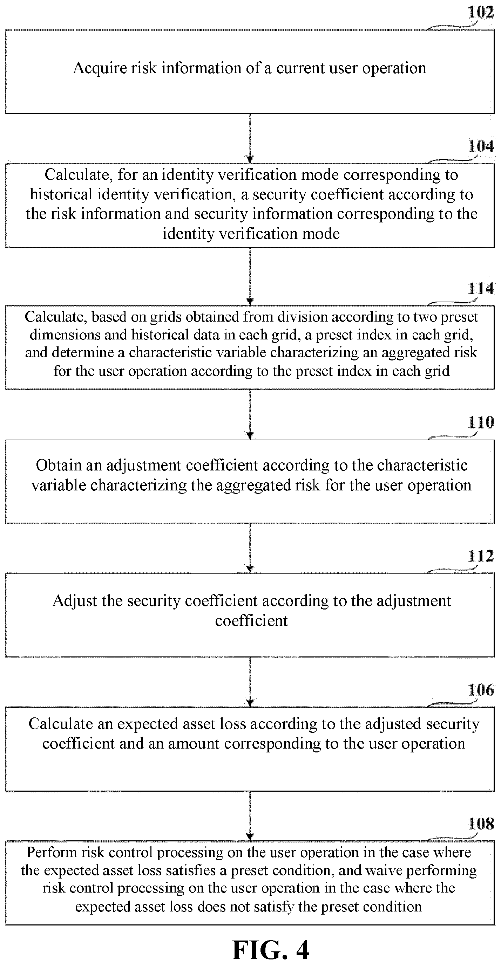

FIG. 4 is another schematic diagram of the risk control method in the present embodiment. As shown in FIG. 4, before step 110, the risk control method may further include the following step.

In step 114, based on grids obtained from division according to two preset dimensions and historical data in each grid, a preset index in each grid is calculated, and a characteristic variable is determined according to the preset index in each grid. The historical data is data, related to a user operation prior to the current user operation, in the grid.

For example, the two preset dimensions are a first dimension and a second dimension corresponding to the current user operation. The first dimension may be, for example, a merchant or an Internet address corresponding to the current user operation, and the second dimension may be, for example, the time, environment or region, etc. of the current user operation. The preset index may be, for example, an event audit rate indicating a hit rate of a risk identification strategy, a verification failure rate indicating a failure rate of identity verification, a proportion of trusted operations indicating a proportion of the number of user operations performed in a trusted environment and/or a trusted device to the total number of user operations, or an incidence of cases within a prescribed number of days (for example, 30 days). However, the present embodiment is not limited thereto. The preset index may also be other indexes. The historical data may be any data related to a user operation before the current user operation and used to calculate the preset index.

Step 114 is an optional step. Moreover, in FIG. 4, step 114 is performed after step 104, but the present embodiment is not limited thereto. Step 114 may also be performed before step 104, or may be performed in parallel with step 104.

In the present embodiment, there may be one or at least two characteristic variables.

In the case where there is only one characteristic variable, the adjustment coefficient is obtained according to the characteristic variable.

In the present embodiment, in the case where there are at least two characteristic variables, the risk control method may further include a step (not shown): performing weighted calculation on the at least two characteristic variables to obtain a weighted value of the characteristic variables. The step is an optional step.

At this moment, step 110 may include: obtaining the adjustment coefficient according to the weighted value of the characteristic variables.

In the present embodiment, step 108 may include: performing prescribed risk control processing on the user operation in the case where the expected asset loss exceeds a threshold, and waiving performing prescribed risk control processing on the user operation in the case where the expected asset loss does not exceed the threshold. That is, the preset condition in step 108 is that the threshold is exceeded.

In addition, other preset conditions may also be set according to actual needs.

In the present embodiment, in the case where the expected asset loss exceeds a threshold, performing prescribed risk control processing on the user operation may further include: performing prescribed first risk control processing on the user operation in the case where the expected asset loss exceeds the above threshold and does not exceed another threshold; and performing prescribed second risk control processing on the user operation in the case where the expected asset loss exceeds the another threshold. The step is an optional step.

Before step 108, the risk control method may further include a step (not shown): setting the threshold according to the risk information and the amount corresponding to the user operation. Therefore, the threshold may be set more reasonably corresponding to the calculation of the expected asset loss. The step is an optional step.

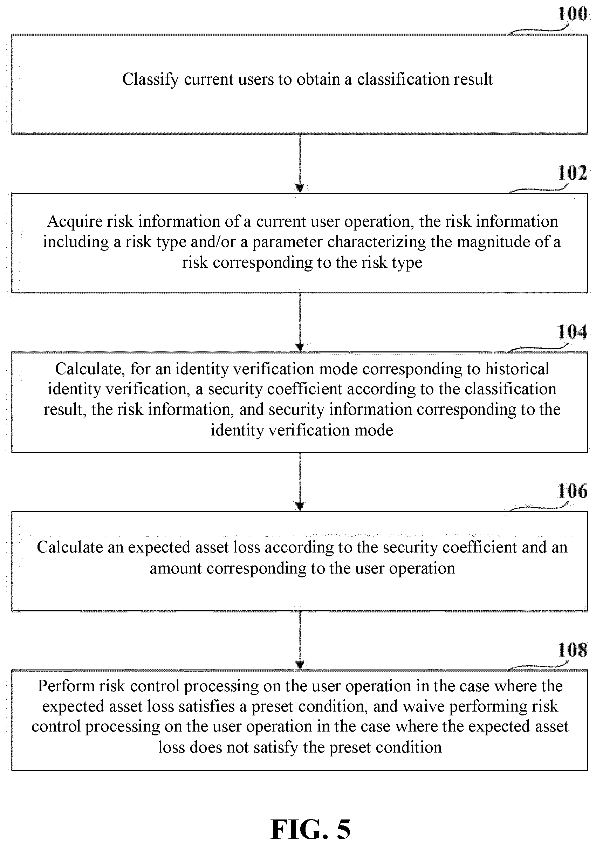

FIG. 5 is yet another schematic diagram of the risk control method in the present embodiment. As shown in FIG. 5, before step 104, the risk control method may further include the following step.

In step 100, users are classified to obtain a classification result.

At this moment, step 104 may include: calculating the security coefficient according to the classification result, the risk information, and the security information. Therefore, the impact of user classification can be further reflected in the calculated expected asset loss, so that the expected asset loss can be calculated more accurately.

In FIG. 5, step 100 is performed before step 102, but the present embodiment is not limited thereto. Step 100 may also be performed after step 102 and before step 104, or may be performed in parallel with step 102.

In the present embodiment, current users may be classified according to at least one of the following information: user consumption behaviors, social attributes of users, information about devices used by users, identity verification modes and results corresponding to historical identity verification, user complaints, user cases (such as fraud cases reported by users), and user security awareness. However, the present embodiment is not limited thereto, and users may be classified according to other information related to the users.

In the present embodiment, a classification rule may, for example, consider factors such as the gullibility of users and/or the disturbance sensitivity of users. Therefore, the classification results may correspondingly be gullible users and disturbance sensitive users. For example, for gullible users, if other conditions are the same, in step 104, the security coefficient is lower; for disturbance sensitive users, if other conditions are the same, in step 104, the security coefficient is higher. However, the present embodiment is not limited thereto, and other factors that can affect the security coefficient may also be considered to classify users.

In the method shown in FIG. 5, if the preset condition is set to be exceeding a threshold, the threshold may be set according to the classification result, the risk information, and the amount corresponding to the user operation. Therefore, the threshold may be set more reasonably corresponding to the calculation mode of the expected asset loss.

By means of the risk control method of the present embodiment, an expected asset loss can be accurately calculated, risk control processing can be flexibly implemented for different users and risks, interruptions to users caused by risk control processing can be reduced while guaranteeing the security of user operations, and user experience can be improved.

### Embodiment 2

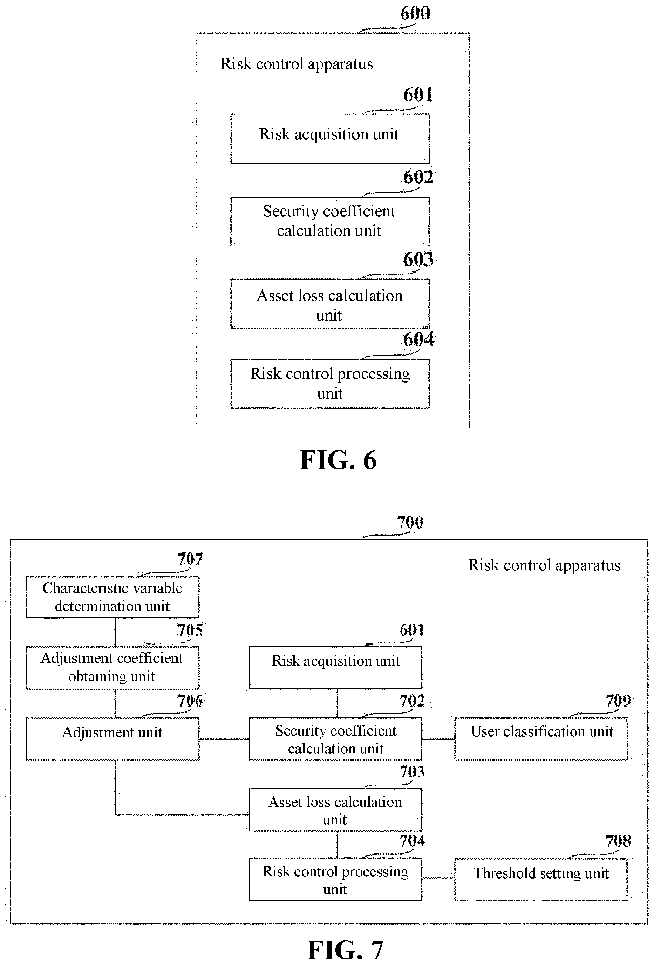

Embodiment 2 provides a risk control apparatus. FIG. 6 is a schematic diagram of a risk control apparatus in the present embodiment. In the present embodiment, the same parts as those in Embodiment 1 will not be described again.

As shown in FIG. 6, risk control apparatus 600 includes risk acquisition unit 601, security coefficient calculation unit 602, asset loss calculation unit 603, and risk control processing unit 604.

Risk acquisition unit 601 acquires risk information of a current user operation, the risk information including a risk type and/or a parameter characterizing the magnitude of a risk corresponding to the risk type. Security coefficient calculation unit 602 calculates, for an identity verification mode corresponding to historical identity verification, a security coefficient according to the risk information and security information corresponding to the identity verification mode. The historical identity verification includes identity verification for a current user prior to the user operation. The security information is information related to the security of the identity verification mode. Asset loss calculation unit 603 calculates an expected asset loss according to the security coefficient and an amount corresponding to the user operation. Risk control processing unit 604 performs prescribed risk control processing on the user operation in the case where the expected asset loss satisfies a preset condition, and waives performing prescribed risk control processing on the user operation in the case where the expected asset loss does not satisfy the preset condition.

In the present embodiment, in the case where the historical identity verification corresponds to one identity verification mode, security coefficient calculation unit 602 may calculate a security coefficient corresponding to the identity verification mode according to the risk information and the security information for the identity verification mode.

In the present embodiment, in the case where the historical identity verification corresponds to at least two identity verification modes, security coefficient calculation unit 602 may calculate, for each of the at least two identity verification modes, a sub-security coefficient corresponding to the identity verification mode according to the risk information and security information corresponding to the identity verification mode, perform weighted calculation on the sub-security coefficients respectively corresponding to the at least two identity verification modes, and use a weighted value as the security coefficient.

FIG. 7 is another schematic diagram of the risk control apparatus in the present embodiment. As shown in FIG. 7, risk control unit 700 includes risk acquisition unit 601, security coefficient calculation unit 702, asset loss calculation unit 703, and risk control processing unit 704.

Risk acquisition unit 601 is as described above and will not be repeated here. Security coefficient calculation unit 702, asset loss calculation unit 703, and risk control processing unit 704 can respectively implement the functions implemented by security coefficient calculation unit 602, asset loss calculation unit 603, and risk control processing unit 604.

In the present embodiment, as shown in FIG. 7, risk control unit 700 may further include adjustment coefficient obtaining unit 705 and adjustment unit 706. Adjustment coefficient obtaining unit 705 may obtain an adjustment coefficient according to a characteristic variable characterizing an aggregated risk for the user operation. Adjustment unit 706 may adjust the security coefficient according to the adjustment coefficient. Asset loss calculation unit 703 may calculate the expected asset loss according to the adjusted security coefficient and the amount corresponding to the user operation.

Adjustment coefficient obtaining unit 705 and adjustment unit 706 are optional units.

In the present embodiment, as shown in FIG. 7, risk control apparatus 700 may further include characteristic variable determination unit 707. Characteristic variable determination unit 707 may calculate, based on grids obtained from division according to two preset dimensions and historical data in each grid, a preset index in each grid, and determine the characteristic variable according to the preset index in each grid. The historical data is data, related to a user operation prior to the current user operation, in the grid.

In the present embodiment, as shown in FIG. 7, in the case where there are at least two characteristic variables, characteristic variable calculation unit 707 may further perform weighted calculation on the at least two characteristic variables to obtain a weighted value of the characteristic variables, and adjustment coefficient obtaining unit 705 may obtain the adjustment coefficient according to the weighted value of the characteristic variables.

Characteristic variable determination unit 707 is an optional unit.

In the present embodiment, risk control processing unit 704 may perform prescribed risk control processing on the user operation in the case where the expected asset loss exceeds a threshold, and may waive performing prescribed risk control processing on the user operation in the case where the expected asset loss does not exceed the threshold.

In the present embodiment, as shown in FIG. 7, risk control apparatus 700 may further include threshold setting unit 708 that sets the above threshold according to the risk information and the amount corresponding to the user operation.

Threshold setting unit 708 is an optional unit.

In the present embodiment, as shown in FIG. 7, risk control apparatus 700 may further include user classification unit 709. User classification unit 709 may classify users to obtain a classification result, and security coefficient calculation unit 702 may calculate the security coefficient according to the classification result, the risk information, and the security information.

User classification unit 709 is an optional unit.

For specific implementations of the functions of the above units in the present embodiment, reference may be made to Embodiment 1, and details are not described herein again.

By means of the risk control apparatus of the present embodiment, an expected asset loss can be accurately calculated, risk control processing can be flexibly implemented for different users and risks, interruptions to users caused by risk control processing can be reduced while guaranteeing the security of user operations, and user experience can be improved.

The embodiments of the present specification further provide a computer-readable program that causes a processor to perform the method in Embodiment 1.

The embodiments of the present specification further provide a storage medium storing computer-readable programs. The computer-readable programs cause a processor to perform the method in Embodiment 1.

The embodiments of the present specification further provide an electronic device. The electronic device includes a processor and a memory for storing computer-readable programs that cause the processor to perform the method in Embodiment 1. The electronic device in the present embodiment may be any type of electronic devices. The electronic device may be, for example, a terminal device on a user side, or a server device on a network side, or may be implemented in cooperation between the terminal device and the server device, and the server device may be a server device or a server device cluster composed of a plurality of server devices. That is to say, the processor and the memory of the electronic device in the present embodiment may be a processor and a memory provided in one device, or may be processors and memories provided in a plurality of devices in a distributed manner.

The risk control apparatus described in conjunction with the embodiments of the present specification may be directly embodied as hardware, a software module executed by a processor, or a combination of both. For example, one or more of the functional block diagrams shown in FIG. 6 and/or one or more combinations of the functional block diagrams may correspond to each software module of a computer program flow or each hardware module. These software modules may respectively correspond to the various steps shown in FIG. 1. These hardware modules may be implemented by, for example, changing these software modules into firmware using a field programmable gate array (FPGA).

The software modules may be located in a RAM, a flash memory, a ROM, an EPROM, an EEPROM, a register, a hard disk, a removable disk, a CD-ROM, or any other forms of storage medium known in the art. A storage medium may be coupled to the processor, so that the processor can read information from the storage medium and write information to the storage medium. Or the storage medium may be a component of the processor. The processor and the storage medium may be located in an application-specific integrated circuit (ASIC). The software modules may be stored in the memory of the electronic device, or may be stored in a memory card that can be inserted into the electronic device. For example, if the electronic device adopts a larger-capacity MEGA-SIM card or a large-capacity flash memory device, the software modules may be stored in the MEGA-SIM card or the large-capacity flash memory device.

One or more of the functional block diagrams described in the drawings and/or one or more combinations of the functional block diagrams may be implemented as a general-purpose processor, a digital signal processor (DSP), an ASIC, an FPGA or other programmable logic devices, discrete gates or transistor logic devices, discrete hardware components, or any suitable combination thereof for performing the functions described in the present application. One or more of the functional block diagrams described in the drawings and/or one or more combinations of the functional block diagrams may also be implemented as a combination of computing devices, for example, a combination of a DSP and a microprocessor, a plurality of microprocessors, one or more microprocessors combined with the DSP communicatively, or any other such configuration.

The present invention has been described above in conjunction with specific implementations, but those skilled in the art should understand that these descriptions are examples and do not limit the protection scope of the present invention. Those skilled in the art can make various variations and modifications to the present invention according to the principles of the present invention, and these variations and modifications are also within the scope of the present invention.

## Claims

1. A computer-implemented risk control method, the risk control method comprising:
acquiring (102) risk information of a user operation, wherein the user operation is an operation for an amount and the risk information comprises a risk type and a parameter characterizing a magnitude of a risk corresponding to the risk type, the risk type being a remote risk for a personal computer;
calculating (104), for an identity verification mode corresponding to historical identity verification, a security coefficient according to the risk information and security information corresponding to the identity verification mode, wherein the historical identity verification comprises identity verification for a current user prior to the user operation, and the security information is information related to security of the identity verification mode;
calculating (106) an expected asset loss according to the security coefficient and the amount corresponding to the user operation; and
performing (108) prescribed risk control processing on the user operation when the expected asset loss satisfies a preset condition, wherein the prescribed risk control processing comprises not allowing the user operation, and waiving performing the prescribed risk control processing on the user operation when the expected asset loss does not satisfy the preset condition.

2. The risk control method according to claim 1, wherein when the historical identity verification corresponds to at least two identity verification modes, calculating, for an identity verification mode corresponding to historical identity verification, a security coefficient according to the risk information and security information corresponding to the identity verification mode comprises:
calculating, for each of the at least two identity verification modes, a sub-security coefficient corresponding to the identity verification mode according to the risk information and security information corresponding to the identity verification mode; and
performing weighted calculation on the sub-security coefficients respectively corresponding to the at least two identity verification modes, and using a weighted value as the security coefficient.

3. The risk control method according to claim 1, the risk control method further comprising:
obtaining an adjustment coefficient according to a characteristic variable characterizing an aggregated risk for the user operation,
and after calculating, for an identity verification mode corresponding to historical identity verification, a security coefficient according to the risk information and security information corresponding to the identity verification mode, the risk control method further comprising:
adjusting the security coefficient according to the adjustment coefficient,
wherein calculating an expected asset loss according to the security coefficient and the amount corresponding to the user operation comprises:
calculating the expected asset loss according to the adjusted security coefficient and the amount corresponding to the user operation.

4. The risk control method according to claim 3,
before obtaining an adjustment coefficient according to a characteristic variable characterizing an aggregated risk for the user operation, the risk control method further comprising:
calculating, based on grids obtained from division according to two preset dimensions and historical data in each grid, a preset index in each grid, and determining the characteristic variable according to the preset index in each grid, wherein the historical data is data, related to another user operation prior to the user operation, in the grid.

5. The risk control method according to claim 3 or 4, when there are at least two characteristic variables, the risk control method further comprising:
performing weighted calculation on the at least two characteristic variables to obtain a weighted value of the characteristic variables,
wherein obtaining an adjustment coefficient according to a characteristic variable characterizing an aggregated risk for the user operation comprises:
obtaining the adjustment coefficient according to the weighted value of the characteristic variables.

6. The risk control method according to claim 1,
wherein performing prescribed risk control processing on the user operation when the expected asset loss satisfies a preset condition and waiving performing the prescribed risk control processing on the user operation when the expected asset loss does not satisfy the preset condition comprises:
performing the prescribed risk control processing on the user operation when the expected asset loss exceeds a threshold, and waiving performing the prescribed risk control processing on the user operation when the expected asset loss does not exceed the threshold.

7. The risk control method according to claim 6, before performing prescribed risk control processing on the user operation when the expected asset loss satisfies a preset condition and waiving performing the prescribed risk control processing on the user operation when the expected asset loss does not satisfy the preset condition, the risk control method further comprising:
setting the threshold according to the risk information and the amount.

8. The risk control method according to claim 1, before calculating, for an identity verification mode corresponding to historical identity verification, a security coefficient according to the risk information and security information corresponding to the identity verification mode, the risk control method further comprising:
classifying users to obtain a classification result,
wherein calculating, for an identity verification mode corresponding to historical identity verification, a security coefficient according to the risk information and security information corresponding to the identity verification mode comprises:
calculating, for an identity verification mode corresponding to historical identity verification, the security coefficient according to the classification result, the risk information, and security information corresponding to the identity verification mode.

9. An electronic device, the electronic device comprising a processor and a memory for storing computer-readable programs that cause the processor to perform the risk control method according to any one of the preceding claims.

10. A storage medium storing computer-readable programs that cause a processor to perform the risk control method of any one of claims 1-8.

## Patentansprüche

1. Computerimplementiertes Verfahren zur Risikokontrolle, wobei das Verfahren zur Risikokontrolle umfasst:
Erfassen (102) von Risikoinformationen einer Benutzeroperation, wobei die Benutzeroperation eine Operation für einen Betrag ist und die Risikoinformationen eine Risikoart und einen Parameter umfassen, der ein Ausmaß eines Risikos entsprechend der Risikoart charakterisiert, wobei die Risikoart ein entferntes Risiko für einen Personal Computer ist;
Berechnen (104) eines Sicherheitskoeffizienten gemäß den Risikoinformationen und den Sicherheitsinformationen, die dem Identitätsverifizierungsmodus entsprechen, für einen Identitätsverifizierungsmodus, der einer historischen Identitätsverifizierung entspricht, wobei die historische Identitätsverifizierung eine Identitätsverifizierung für einen aktuellen Benutzer vor der Benutzeroperation umfasst, und die Sicherheitsinformationen Informationen sind, die sich auf die Sicherheit des Identitätsverifizierungsmodus beziehen;
Berechnen (106) eines erwarteten Asset-Verlustes gemäß dem Sicherheitskoeffizienten und dem der Benutzeroperation entsprechenden Betrag; und
Durchführen (108) einer vorgegebenen Risikokontrollverarbeitung bei der Benutzeroperation, wenn der erwartete Asset-Verlust eine voreingestellte Bedingung erfüllt, wobei die vorgegebene Risikokontrollverarbeitung das Nichtzulassen der Benutzeroperation umfasst, und Verzichten auf das Durchführen der vorgegebenen Risikokontrollverarbeitung bei der Benutzeroperation, wenn der erwartete Asset-Verlust die voreingestellte Bedingung nicht erfüllt.

2. Verfahren zur Risikokontrolle nach Anspruch 1, wobei, wenn die historische Identitätsverifizierung mindestens zwei Identitätsverifizierungsmodi entspricht, das Berechnen eines Sicherheitskoeffizienten für einen Identitätsverifizierungsmodus, der der historischen Identitätsverifizierung entspricht, gemäß den Risikoinformationen und Sicherheitsinformationen, die dem Identitätsverifizierungsmodus entsprechen, umfasst:
Berechnen eines Subsicherheitskoeffizienten für jeden der mindestens zwei Identitätsverifizierungsmodi, der dem Identitätsverifizierungsmodus entspricht, gemäß den Risikoinformationen und Sicherheitsinformationen, die dem Identitätsverifizierungsmodus entsprechen; und
Durchführen einer gewichteten Berechnung bei den Subsicherheitskoeffizienten, die jeweils den mindestens zwei Identitätsverifizierungsmodi entsprechen, und Verwenden eines gewichteten Wertes als Sicherheitskoeffizient.

3. Verfahren zur Risikokontrolle nach Anspruch 1, wobei das Verfahren zur Risikokontrolle ferner umfasst:
Erhalten eines Anpassungskoeffizienten gemäß einer charakteristischen Variablen, die ein aggregiertes Risiko für die Benutzeroperation charakterisiert,
und nach dem Berechnen eines Sicherheitskoeffizienten für einen Identitätsverifizierungsmodus, der der historischen Identitätsverifizierung entspricht, gemäß den Risikoinformationen und Sicherheitsinformationen, die dem Identitätsverifizierungsmodus entsprechen, das Verfahren zur Risikokontrolle ferner umfasst:
Anpassen des Sicherheitskoeffizienten gemäß den Anpassungskoeffizienten,
wobei das Berechnen eines erwarteten Asset-Verlustes gemäß dem Sicherheitskoeffizienten und dem der Benutzeroperation entsprechenden Betrag umfasst:
Berechnen des erwarteten Asset-Verlustes gemäß dem. dem angepassten Sicherheitskoeffizienten und dem der Benutzeroperation entsprechenden Betrag.

4. Verfahren zur Risikokontrolle nach Anspruch 3, vor Erhalten eines Anpassungskoeffizienten gemäß einer charakteristischen Variable, die ein aggregiertes Risiko für die Benutzeroperation charakterisiert, wobei das Verfahren zur Risikokontrolle ferner umfasst:
Berechnen eines voreingestellten Indexes in jedem Gitter basierend auf Raster, die durch Teilung gemäß zwei voreingestellten Dimensionen und historischen Daten in jedem Raster erhalten wurden, und Bestimmen der charakteristischen Variablen gemäß dem voreingestellten Index in jedem Raster, wobei die historischen Daten Daten sind, die sich auf eine andere Benutzeroperation vor der Benutzeroperation in dem Raster beziehen.

5. Verfahren zur Risikokontrolle nach Anspruch 3 oder 4, wobei, wenn mindestens zwei charakteristische Variablen vorhanden sind, das Verfahren zur Risikokontrolle ferner umfasst:
Durchführen einer gewichteten Berechnung für die mindestens zwei charakteristischen Variablen, um einen gewichteten Wert für die charakteristischen Variablen zu erhalten,
wobei das Erhalten eines Anpassungskoeffizienten gemäß einer charakteristischen Variablen, die ein aggregiertes Risiko für die Benutzeroperation charakterisiert, umfasst:
Erhalten des Anpassungskoeffizienten gemäß dem gewichteten Wert der charakteristischen Variablen.

6. Verfahren zur Risikokontrolle nach Anspruch 1, wobei das Durchführen der vorgegebenen Risikokontrollverarbeitung bei der Benutzeroperation, wenn der erwartete Asset-Verlust eine voreingestellte Bedingung erfüllt, und das Verzichten auf das Durchführen der vorgegebenen Risikokontrollverarbeitung bei der Benutzeroperation, wenn der erwartete Asset-Verlust die voreingestellte Bedingung nicht erfüllt, umfasst:
Durchführen der vorgegebenen Risikokontrollverarbeitung bei der Benutzeroperation, wenn der erwartete Asset-Verlust einen Schwellenwert überschreitet, und Verzichten auf das Durchführen der vorgegebenen Risikokontrollverarbeitung bei der Benutzeroperation, wenn der erwartete Asset-Verlust den Schwellenwert nicht überschreitet.

7. Verfahren zur Risikokontrolle nach Anspruch 6, vor dem Durchführen einer vorgegebenen Risikokontrollverarbeitung bei der Benutzeroperation, wenn der erwartete Asset-Verlust eine voreingestellte Bedingung erfüllt, und Verzichten auf das Durchführen der vorgegebenen Risikokontrollverarbeitung bei der Benutzeroperation, wenn der erwartete Asset-Verlust die voreingestellte Bedingung nicht erfüllt, wobei das Verfahren zur Risikokontrolle ferner umfasst:
Einstellen des Schwellenwerts gemäß den Risikoinformationen und dem Betrag.

8. Verfahren zur Risikokontrolle nach Anspruch 1, wobei, vor dem Berechnen eines Sicherheitskoeffizienten für einen Identitätsverifizierungsmodus, der einer historischen Identitätsverifizierung entspricht, gemäß den Risikoinformationen und den Sicherheitsinformationen, die dem Identitätsverifizierungsmodus entsprechen, das Verfahren zur Risikokontrolle ferner umfasst:
Klassifizieren von Benutzern, um ein Klassifizierungsergebnis zu erhalten,
wobei das Berechnen eines Sicherheitskoeffizienten gemäß den Risikoinformationen und den Sicherheitsinformationen, die dem Identitätsverifizierungsmodus entsprechen, für einen Identitätsverifizierungsmodus, der einer historischen Identitätsverifizierung entspricht, umfasst:
Berechnen des Sicherheitskoeffizienten gemäß dem Klassifizierungsergebnis, den Risikoinformationen und den Sicherheitsinformationen, die dem Identitätsverifizierungsmodus entsprechen, für einen Identitätsverifizierungsmodus, der der historischen Identitätsverifizierung entspricht.

9. Elektronische Vorrichtung, wobei die elektronische Vorrichtung einen Prozessor und einen Speicher zum Speichern von computerlesbaren Programmen umfasst, die den Prozessor veranlassen, das Verfahren zur Risikokontrolle nach einem der vorhergehenden Ansprüche durchzuführen.

10. Speichermedium, das computerlesbare Programme speichert, die einen Prozessor veranlassen, das Verfahren zur Risikokontrolle nach einem der Ansprüche 1-8 durchzuführen.

## Revendications

1. Procédé de contrôle de risque mis en œuvre par ordinateur, le procédé de contrôle de risque comprenant :
l'acquisition (102) d'informations de risque concernant une opération d'utilisateur, l'opération d'utilisateur étant une opération portant sur un montant et les informations de risque comprenant un type de risque et un paramètre caractérisant une importance d'un risque correspondant au type de risque, le type de risque étant un risque distant pour un ordinateur personnel ;
le calcul (104), pour un mode de vérification d'identité correspondant à une vérification historique d'identité, d'un coefficient de sécurité selon les informations de risque et des informations de sécurité correspondant au mode de vérification d'identité, la vérification historique d'identité comprenant une vérification d'identité pour un utilisateur actuel avant l'opération d'utilisateur, et les informations de sécurité étant des informations relatives à une sécurité du mode de vérification d'identité ;
le calcul (106) d'une perte de bien attendue selon le coefficient de sécurité et le montant correspondant à l'opération d'utilisateur ; et
la réalisation (108) d'un traitement de contrôle de risque prescrit sur l'opération d'utilisateur lorsque la perte de bien attendue remplit une condition prédéfinie, le traitement de contrôle de risque prescrit comprenant la non-autorisation de l'opération d'utilisateur et l'omission de la réalisation du traitement de contrôle de risque prescrit sur l'opération d'utilisateur lorsque la perte de bien attendue ne remplit pas la condition prédéfinie.

2. Procédé de contrôle de risque selon la revendication 1, dans lequel, lorsque la vérification historique d'identité correspond à au moins deux modes de vérification d'identité, le calcul, pour un mode de vérification d'identité correspondant à la vérification historique d'identité, d'un coefficient de sécurité selon les informations de risque et des informations de sécurité correspondant au mode de vérification d'identité comprend :
le calcul, pour chacun des au moins deux modes de vérification d'identité, d'un sous-coefficient de sécurité correspondant au mode de vérification d'identité selon les informations de risque et des informations de sécurité correspondant au mode de vérification d'identité ; et
la réalisation d'un calcul pondéré sur les sous-coefficients de sécurité correspondant respectivement aux au moins deux modes de vérification d'identité, et l'utilisation d'une valeur pondérée comme coefficient de sécurité.

3. Procédé de contrôle de risque selon la revendication 1, le procédé de contrôle de risque comprenant :
l'obtention d'un coefficient d'ajustement selon une variable caractéristique caractérisant un risque consolidé pour l'opération d'utilisateur,
et, après le calcul, pour un mode de vérification d'identité correspondant à une vérification historique d'identité, d'un coefficient de sécurité selon les informations de risque et des informations de sécurité correspondant au mode de vérification d'identité, le procédé de contrôle de risque comprenant en outre :
l'ajustement du coefficient de sécurité selon le coefficient d'ajustement,
le calcul d'une perte de bien attendue selon le coefficient de sécurité et le montant correspondant à l'opération d'utilisateur comprenant :
le calcul de la perte de bien attendue selon le coefficient de sécurité ajusté et le montant correspondant à l'opération d'utilisateur.

4. Procédé de contrôle de risque selon la revendication 3,
avant l'obtention d'un coefficient d'ajustement selon une variable caractéristique caractérisant un risque consolidé pour l'opération d'utilisateur, le procédé de contrôle de risque comprenant en outre :
le calcul, sur la base de grilles obtenues par division selon deux dimensions prédéfinies et de données historiques dans chaque grille, d'un index prédéfini dans chaque grille, et la détermination de la variable caractéristique selon l'index prédéfini dans chaque grille, les données historiques étant des données dans la grille relatives à une autre opération d'utilisateur avant l'opération d'utilisateur.

5. Procédé de contrôle de risque selon la revendication 3 ou 4, lorsqu'il existe au moins deux variables caractéristiques, le procédé de contrôle de risque comprenant en outre :
la réalisation d'un calcul pondéré sur les au moins deux variables caractéristiques pour obtenir une valeur pondérée des variables caractéristiques,
l'obtention d'un coefficient d'ajustement selon une variable caractéristique caractérisant un risque consolidé pour l'opération d'utilisateur comprenant :
l'obtention du coefficient d'ajustement selon la valeur pondérée des variables caractéristiques.

6. Procédé de contrôle de risque selon la revendication 1,
dans lequel la réalisation d'un traitement de contrôle de risque prescrit sur l'opération d'utilisateur lorsque la perte de bien attendue remplit une condition prédéfinie et l'omission de la réalisation du traitement de contrôle de risque prescrit sur l'opération d'utilisateur lorsque la perte de bien attendue ne remplit pas la condition prédéfinie comprend :
la réalisation du traitement de contrôle de risque prescrit sur l'opération d'utilisateur lorsque la perte de bien attendue dépasse un seuil, et l'omission de la réalisation du traitement de contrôle de risque prescrit sur l'opération d'utilisateur lorsque la perte de bien attendue ne dépasse pas le seuil.

7. Procédé de contrôle de risque selon la revendication 6, avant la réalisation du traitement de contrôle de risque prescrit sur l'opération d'utilisateur lorsque la perte de bien attendue remplit une condition prédéfinie, et l'omission de la réalisation du traitement de contrôle de risque prescrit sur l'opération d'utilisateur lorsque la perte de bien attendue ne remplit pas la condition prédéfinie, le procédé de contrôle de risque comprenant en outre :
la fixation du seuil selon les informations de risque et le montant.

8. Procédé de contrôle de risque selon la revendication 1, avant le calcul, pour un mode de vérification d'identité correspondant à la vérification historique d'identité, d'un coefficient de sécurité selon les informations de risque et des informations de sécurité correspondant au mode de vérification d'identité, le procédé de contrôle de risque comprenant en outre :
la classification d'utilisateurs pour obtenir un résultat de classification,
le calcul, pour un mode de vérification d'identité correspondant à la vérification historique d'identité, d'un coefficient de sécurité selon les informations de risque et des informations de sécurité correspondant au mode de vérification d'identité comprenant :
le calcul, pour un mode de vérification d'identité correspondant à la vérification historique d'identité, du coefficient de sécurité selon le résultat de classification, les informations de risque et des informations de sécurité correspondant au mode de vérification d'identité.

9. Dispositif électronique, le dispositif électronique comprenant un processeur et une mémoire destinée à stocker des programmes lisibles par ordinateur qui amènent le processeur à réaliser le procédé de contrôle de risque selon l'une quelconque des revendications précédentes.

10. Support de stockage stockant des programmes lisibles par ordinateur qui amènent un processeur à réaliser le procédé de contrôle de risque selon l'une quelconque des revendications 1 à 8.
